# Europäisches Patentamt

# European Patent Office

# Office européen des brevets

(11) Numéro de publication: **0 213 038**
**B1**

(12) # FASCICULE DE BREVET EUROPÉEN

(45) Date de publication du fascicule du brevet:
**23.11.88**

(21) Numéro de dépôt: **86401773.6**

(22) Date de dépôt: **07.08.86**

(51) Int. Cl.⁴: **F 28 D 20/00,** F 24 D 11/00

(54) Dispositif d'échange de chaleur parcouru par deux fluides à circuits indépendants.

(30) Priorité: **07.08.85 FR 8512099**

(43) Date de publication de la demande:
**04.03.87 Bulletin 87/10**

(45) Mention de la délivrance du brevet:
**23.11.88 Bulletin 88/47**

(84) Etats contractants désignés:
**BE CH DE FR GB LI LU**

(56) Documents cité:
**EP-A-0 010 819**
**FR-A-2 365 772**
**FR-A-2 366 521**
**FR-A-2 503 855**
**US-A-4 313 424**

(73) Titulaire: **FEDERATION NATIONALE DU BATIMENT, 33, avenue Kléber, F-75784 Paris Cédex 16 (FR)**

(72) Inventeur: **Antonini, Gérard, 283, rue de Charenton, F-75012 Paris (FR)**
Inventeur: **Pain, Jean-Pierre, 36, rue Campion, F-60880 Le Meux (FR)**
Inventeur: **Audet, Denis, 7272 rue Chambord Appt 3, Montreal H2E 3W6 (CA)**
Inventeur: **Fauconnier, Roland, 9, rue de la Magnannerie Herbouvilliers, F-78460 Choisel (FR)**

(74) Mandataire: **Martin, Jean-Jacques, Cabinet REGIMBEAU 26, Avenue Kléber, F-75116 Paris (FR)**

LIBER, STOCKHOLM 1988

## Description

Cette invention concerne un dispositif d'échange de chaleur parcouru par deux fluides à circuits indépendants, et plus particulièrement par un fluide primaire échangeant avec une source thermique intermittente à l'entrée du dispositif, et par un fluide secondaire permettant la récupération d'énergie thermique à la sortie.

Il existe déjà de nombreux dispositifs d'échange de chaleur parcourus par deux fluides à circuits indépendants. Cependant, lorsque le fluide primaire échange avec une source thermique intermittente, les dispositifs existants sont prévus avec une structure lourde et encombrante, citons par exemple les régénérateurs rotatifs, ce qui limite leur domaine d'application à l'industrie. Il est en effet difficile de pouvoir disposer à la sortie de ces dispositifs d'une puissance thermique essentiellement constante en raison des fluctuations thermiques du fluide primaire qu'il convient d'absorber le mieux possible. De tels dispositifs sont en particulier inenvisageables pour des applications domestiques, par exemple dans des installations de chauffage solaire ou géothermique.

Plus généralement, la présence de surchauffes transitoires dans l'habitat amenant à utiliser une puissance de ventilation variable, et la disponibilité de rejets thermiques intermittents dans l'industrie, amènent à concevoir des dispositifs de récupération d'énergie de plus en plus performants en vue d'une meilleure gestion de l'énergie, et surtout pour les nombreux cas où ces sources thermiques sont variables en fonction du temps en plus des surchauffes de l'habitat isolé déjà mentionnées, il convient de citer les problèmes de chaleur posés au défournement dans l'industrie, par exemple avec les fours de séchage ou les fours de cuisson.

Les solutions existantes sont orientées vers des techniques de stockage plus ou moins sophistiquées.

C'est ainsi que l'on utilise des éléments d'inertie thermique (briques, matrices métalliques, céramiques) dans les récupérateurs existants, par exemple les régénérateurs fixes ou rotatifs. Le stockage de l'énergie thermique est alors effectué par la chaleur sensible des matériaux constituant la matrice stockeuse. Cependant, la puissance restituée est périodique ou discontinue, et ce d'autant plus que les fluctuations thermiques du fluide caloporteur sont importantes, le stockage jouant en effet seulement le rôle de capacité thermique.

De nombreux travaux sont actuellement effectués sur des régénérateurs utilisant pour le stockage un matériau à changement de phase, dont le grand intérêt par rapport aux matériaux classiques réside dans la forte densité énergétique disponible sur un faible écart de température, c'est-à-dire plus particulièrement autour de la température de fusion/solidification du matériau à changement de phase.

Il a par exemple été envisagé d'utiliser des paraffines comme milieu de stockage par chaleur latente, matériau économique, dont on peut faire varier assez largement le point de fusion, et ne subissant aucune dégradation des propriétés thermiques après un nombre important de cycles. Cependant, ces matériaux ont une faible conductivité thermique, qui leur confère une grande inertie lors des processus d'échange de chaleur avec un fluide caloporteur, ce qui oblige à augmenter la conductivité thermique et/ou à accroître la surface d'échange entre le milieu de stockage et le fluide caloporteur.

Il a été par ailleurs proposé d'autres systèmes échangeurs à deux fluides, dans lesquels était utilisé un matériau à changement de phase comme tampon thermique; ceci est particulièrement bien illustré dans le FR-A-2 366 521 et EP-A-0 010 819.

Cependant, avec les systèmes ci-dessus, les échanges entre le matériau à changement de phase et les fluides utilisés sont en général insuffisants, en raison des propriétés thermiques des matériaux à changement de phase (conductivité thermique généralement faible) et/ou du faible rapport entre surfaces d'échange et volume de matériau à changement de phase et/ou du contrôle difficile de la circulation des fluides. De ce fait, la dynamique d'échange ne fait pas toujours apparaître nettement les paliers de changement de phase, ce qui aboutit à une moins bonne efficacité du système utilisé.

Pour améliorer les échanges entre le fluide utilisé et un matériau à changement de phase, il a été proposé un dispositif comportant une pluralité de puits alvéolaires pour contenir le matériau de stockage, et un canal de circulation pour le fluide caloporteur communiquant avec les ouvertures des puits alvéolaires et la surface libre du milieu de stockage; une telle technique est par exemple illustrée dans le FR-A-2 503 855.

Il est important de remarquer que les solutions connues, utilisant des matériaux à changement de phase, sont la plupart du temps limitées au seul stockage latent permanent avec un fluide caloporteur unique pour la régénération, le de stockage se faisant ultérieurement et périodiquement à la demande.

Le but de l'invention est de proposer un dispositif d'échange de chaleur avec stockage thermique intégré, de structure simple et économique, parcouru par deux fluides à circuits indépendants, permettant de récupérer une puissance thermique essentiellement constante malgré les fluctuations du fluide primaire, le dispositif fonctionnant comme un thermoredresseur.

Il s'agait plus particulièrement d'un dispositif d'échange de chaleur parcouru par deux fluides à circuits indépendants, un fluide primaire échangeant avec une source thermique intermittente à l'entrée du dispositif, et un fluide secondaire permettant la récupération d'énergie thermique à la sortie, ledit fluide primaire échangeant en permanence avec un milieu de stockage de chaleur utilisant un matériau à changement de phase, ledit milieu remplissant une fonction de tampon thermique à température constante lors du changement de phase dudit matériau, caractérisé par le fait qu'il comporte un empilement d'au moins deux plaques échangeuses, dont chacune présente un gaufrage définissant au moins un serpentin continu de telle façon que lesdites plaques échangeuses soient parcourues en série ou en parallèle par le fluide secondaire, lesdites plaques échangeuses étant par ailleurs séparées par au moins une entretoise perforée autorisant l'écoulement du fluide primaire dans l'espace inter-plaques laissé libre par le milieu de stockage utilisant un matériau à changement de phase, l'échange du fluide secondaire se faisant ainsi simultanément avec le fluide primaire et avec ledit milieu de stockage, de façon que ledit fluide secondaire permette d'obtenir à la sortie une puissance thermique essentiellement constante, indépendamment des fluctuations thermiques du fluide primaire.

De préférence, la ou les entretoises, orientées par exemple perpendiculairement à l'écoulement du fluide primaire, peuvent permettre une contenérisation alvéolaire du matériau à changement de phase dispose directement contre une face de la plaque échangeuse associée.

Le fluide primaire est en contact direct avec le milieu de stockage, ou indirect par l'intermédiaire d'une interface matérialisée par une paroi ou un film.

Afin de pouvoir réaliser une utilisation étagée permettant plusieurs niveaux de récupération, il est possible de prévoir que le fluide primaire echange successivement avec différents milieux de stockage utilisant chacun un matériau à changement de phase correspondant à un niveau thermique prédéterminé, un fluide secondaire étant associé à chacun desdits milieux de stockage pour l'obtention d'une puissance thermique correspondante essentiellement constante.

De préférence, les écoulements de fluide primaire et de fluide secondaire sont à contre-courants.

Pour certaines applications particulières, il est intéressant de choisir un fluide secondaire pouvant subir des changements de phase durant le fonctionnement pour permettre un relèvement du niveau de l'énergie thermique récupérée.

D'autres caractéristiques et avantages de l'invention apparaîtront plus clairement dans la description qui va suivre et les dessins annexés, concernant des modes de réalisation particuliers d'un dispositif d'échange de chaleur, et illustrant à titre non limitatif des applications possibles, en référence aux figures où:

- la figure 1 illustre en coupe un dispositif d'échange de chaleur conforme à l'invention, qui peut être réalisé sous forme d'un plateau formant un module empilable verticalement,
- la figure 2 est une coupe transversale d'un empilement de trois plaques échangeuses, formant une partie d'une structure modulaire conforme à l'invention, ces plaques rectangulaires étant gaufrées pour présenter un serpentin recevant ici un fluide secondaire frigorigène,
- les figures 3a à 3e illustrent schématiquement diverses applications du dispositif de l'invention, la figure 3e donnant un exemple d'utilisation étagée permettant plusieurs niveaux de récupération avec des circuits de fluide secondaire associés à chacun de ces niveaux.

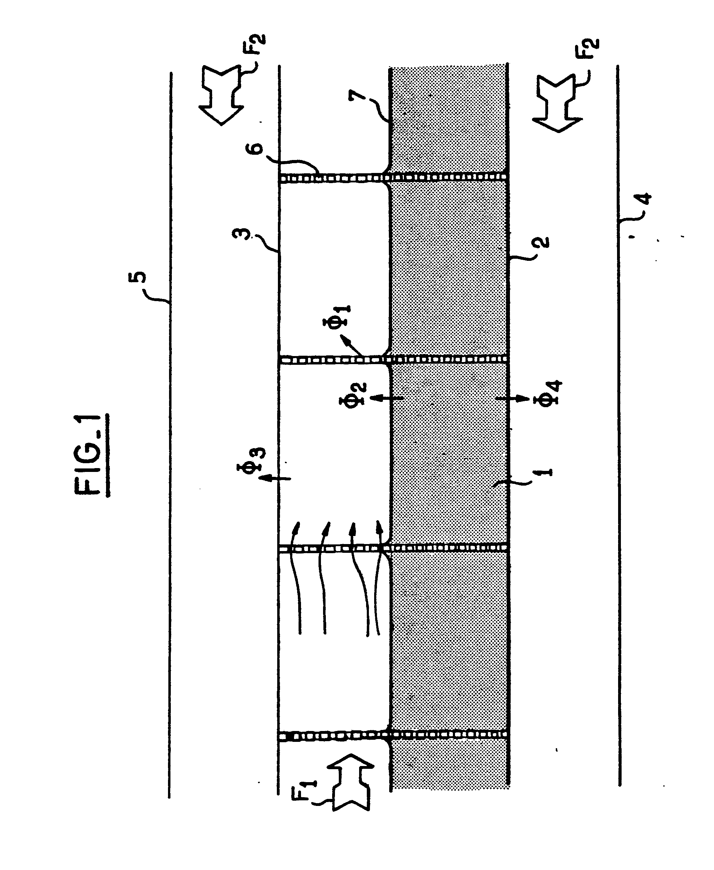

Figure 1, le dispositif d'échange de chaleur conforme à l'invention est parcouru par deux fluides à circuits indépendants. Le fluide primaire, symbolisé par la flèche $F_1$, échange à l'entrée du dispositif avec une source thermique aléatoire ou intermittente (non représentée ici), tandis qu'un fluide secondaire, symbolisé par les flèches $F_2$, permet la récupération d'énergie thermique à la sortie dudit dispositif.

Le fluide primaire $F_1$ échange en permanence avec un milieu de stockage de chaleur utilisant un matériau à changement de phase 1, ledit milieu remplissant une fonction de tampon thermique à température constante lors du changement de phase dudit matériau, de façon que le fluide secondaire $F_2$ permette d'obtenir à la sortie une puissance thermique essentiellement constante, indépendamment des fluctuations thermiques du fluide primaire $F_1$, le dispositif de l'invention fonctionnant comme un thermo-redresseur.

La structure illustrée en figure 1 comporte des parois 2, 3 délimitant le circuit primaire concerné par le fluide primaire $F_1$ et le matériau à changement de phase 1, et des parois 4, 5 délimitant le circuit secondaire concerné par le fluide secondaire $F_2$ qui échange simultanément avec le fluide primaire $F_1$ et le milieu de stockage de chaleur.

Entre les parois 2, 3 sont prévues des entretoises métalliques 6, ayant la forme d'ailettes perforées pour autoriser l'écoulement du fluide primaire $F_1$, et permettant une contenérisation alvéolaire du matériau à changement de phase 1 disposé directement contre la paroi 2, c'est-à-dire un fractionnement de ce matériau par la partie inférieure desdites entretoises immergées dans ledit matériau. Ces ailettes contribuent dans une mesure importante à l'obtention d'une bonne dynamique d'échange.

Chaque fois que la disposition spatiale et la compatibilité MCP/fluide le parmettent, il est intéressant de prévoir un contact direct entre le fluide primaire $F_1$ et le matériau à changement de phase 1 (flux $\Phi_2$, l'interface 7 étant libre, car ceci améliore très sensiblement la dynamique d'échange thermique au sein du milieu de stockage (lorsque cela ne sera pas possible, l'interface 7 sera matérialisée par une paroi ou un film). De plus, l'échange à contact direct permet de s'affranchir très simplement de la contrainte que représente la variation de volume du matériau à changement de phase lors de ce changement de phase, variation qui est de l'ordre de 10 à 15 % selon le type de matériau choisi, grâce a la dilatation libre dudit matériau.

L'ailetage obtenu par les entretoises 6 permet par ailleurs d'accroître l'efficacité des transferts thermiques entre le fluide primaire et les ailettes d'une part, et entre le matériau à changement de phase et les ailettes d'autre part. L'écoulement du fluide primaire $F_1$ est ici essentiellement perpendiculaire aux ailettes qui se trouvent être percolables grâce aux orifices qui peuvent augmenter localement la vitesse de l'écoulement et donc le transfert thermique (flux $\Phi_1$). Grâce à la conténérisation alvéolaire du matériau à changement de phase et au contact direct entre le fluide primaire caloporteur et le milieu de stockage) il est possible d'obtenir des performances d'échange très satisfaisantes.

De plus, cet ailetage autorise un échange thermique direct entre le fluide primaire $F_1$ et le fluide secondaire $F_2$, tandis que le matériau à changement de phase 1 permet de différer cet échange. Les échanges concernant le fluide secondaire $F_2$ sont illustrés sur la figure 1 par les flèches $\Phi_3$ et $\Phi_4$.

Le choix du matériau à changement de phase dépendra naturellement de la gamme de températures opératoires du dispositif. En particulier, pour la récupération de puissance thermique à partir de rejets chauds, le point de fusion du matériau à changement de phase doit être inférieur à la température d'entrée de ces rejets, et supérieur à la température de sortie souhaitée pour le fluide secondaire. Naturellement, les fluides primaires et/ou secondaires peuvent être monophasiques, ou subir des changements de phase (vaporisation, condensation) durant le fonctionnement du dispositif. En particulier, une vaporisation du fluide secondaire à flux constant permet la recompression des vapeurs, et donc un relèvement du niveau de l'énergie thermique récupérée sur le circuit secondaire.

Il faut bien comprendre que la structure illustrée à la figure 1 est générale, et que celle-ci peut déboucher sur des mises en oeuvre différentes. Cette structure peut par exemple être en plateaux empilés verticalement, le plateau délimité par les parois 2, 3 pouvant être circulaire, avec des entretoises d'ailetage cylindriques et coaxiales; cette structure peut encore être constituée de plaques échangeuses empilées, parcourues en série par le fluide secondaire, mais d'autres structures analogues sont naturellement envisageables, dès lors qu'elles permettent une utilisation en stockage de matériaux à changement de phase assurant une fonction de tampon thermique à température constante lors de la phase de fusion ou de solidification dudit matériau, et permettant la récupération d'une puissance thermique essentiellement constante à la sortie du circuit secondaire.

Cependant, une réalisation modulaire, selon un empilement de plaques échangeuses, débouche sur des utilisations particulièrement rationnelles et bien adaptables aux performances demandées.

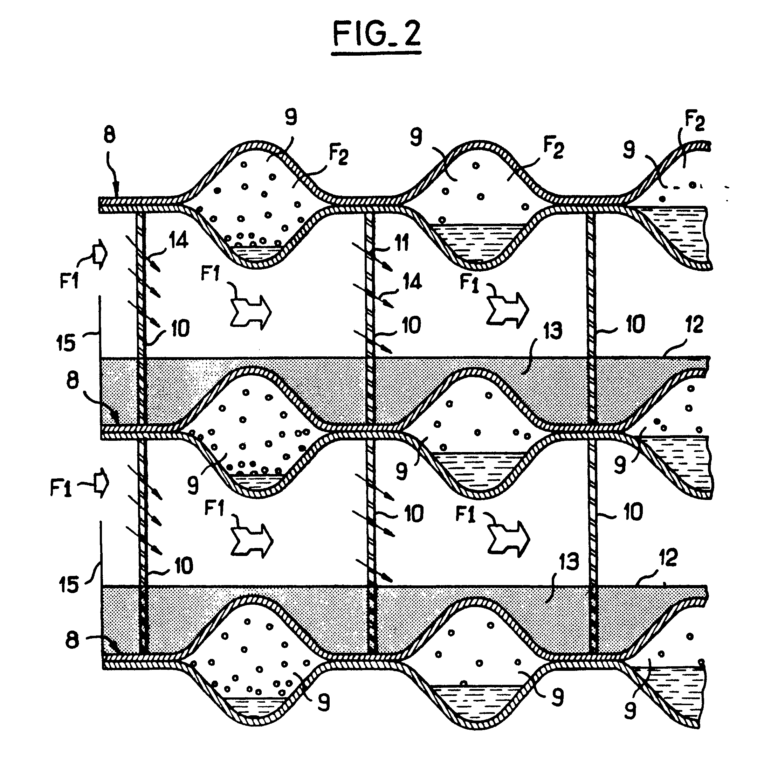

Une telle réalisation est illustrée en coupe sur la figure 2. La structure comporte une pluralité (ici trois) de plaques échangeuses 8 parcourues en série par le fluide secondaire $F_2$. Ces plaques rectangulaires sont gaufrées, selon la technique bien connue dans le domaine des capteurs solaires, dénommée souvent "Roll-Bond", avec laquelle le gaufrage permet de définir un serpentin continu, dont l'entrée et la sortie sont en général prévues à chaque extrémité d'un même bord latéral de la plaque: il faut donc bien comprendre que les alvéoles en as de carreau 9 représentés en coupe sur la figure 2 concernent un même serpentin pour chacune des plaques échangeuses 8, ces serpentins étant en général reliés en série ou parallèle pour former le circuit secondaire. Il faut également bien comprendre que, dans le cadre de la présente description, la notion d'"empilement" de plaques échangeuses ne concerne pas la structure propre de chacune de ces plaques, lesquelles sont en général formées à partir de deux sous-ensembles gaufrés réunis entre eux pour former le ou les serpentins, mais bien l'agencement spatial de ces plaques échangeuses les unes par rapport aux autres.

Les plaques échangeuses 8 sont interconnectées mécaniquement par des entretoises 10, dont les fonctions sont analogues aux entretoises 6 de la figure 1. On notera qu'ici les entretoises 10 sont orientées essentiellement perpendiculairement à l'écoulement du fluide primaire $F_1$ (une autre orientation étant naturellement possible), et présentent des orifices 11 obliques, permettant une certaine convergence de l'écoulement en direction de la surface libre 12 du milieu de stockage utilisant un matériau à changement de phase 13, ainsi que symbolisé par les flèches 14. Il est d'ailleurs possible de faire varier l'inclinaison des orifices d'une entretoise à l'autre pour obtenir un effet de convergence plus rapide en amont qu'en aval.

L'espace inter-plaques est donc partiellement rempli de matériau à changement de phase 13, confiné par des cloisons latérales 15, l'espace disponible restant étant balayé par le fluide primaire $F_1$, ici en contact direct avec la matériau à changement de phase.

L'échange du fluide secondaire $F_2$, avec le fluide primaire $F_1$ et le matériau à changement de phase 13, permet d'obtenir une puissance thermique de récupération essentiellement constante, selon le but principal recherché, grâce au fonctionnement du dispositif en thermo-redresseur. La figure 2 donne une illustration du processus d'échange avec un fluide primaire tel que de l'air chaud à débit intermittent et un fluide secondaire $F_2$ réfrigérant, tel qu'un fréon, le matériau à changement de phase étant alors une paraffine industrielle correspondant à la plage de températures concerné; à titre d'exemple, pour un fluide primaire à 80°C environ et un fréon s'évaporant à 49°C sous une pression atmosphérique, on utilise une paraffine dont la température de fusion est de l'ordre de 54 à 56°C. Si l'on examine les alvéoles 9 de la figure 2, le fluide secondaire F$_2$ est schématisé par des bulles de vapeur au-dessus d'une portion liquide, la transformation progressive au fur et à mesure de l'échange étant illustrée par la variation de la portion liquide.

Là encore, il est possible de relever le niveau de l'énergie thermique récupérée sur le circuit secondaire par une recompression des vapeurs résultant de la vaporisation du fluide secondaire à flux constant, ceci étant possible grâce au caractère constant du régime obtenu par le dispositif de l'invention.

L'expérience montre que, pour un tel dispositif fonctionnant en évaporateur/stockeur, le débit de fréon évaporé est en effet constant, même quand le débit d'air chaud est intermittent. En fait, pour un débit d'air et une période d'intermittence donnés, il semble exister une limite théorique pour un débit maximum de fréon évaporable sans diminution de l'énergie interne du dispositif échangeur-stockeur, de sorte qu'au-delà de cette limite théorique, le dispositif fonctionne en fait en déstockage, car après un certain nombre de cycles il n'amortit plus les fluctuations thermiques du fluide primaire. Une étude comparative a permis de montrer que l'on obtient un dimensionnement optimal lorsque le rapport entre l'énergie soutirée en moyenne et l'énergie soutirable est voisin de l'unité.

Les applications du dispositif échangeur-stockeur de l'invention sont nombreuses, en fonction des fluides employés dans chaque circuit, le matériau à changement de phase étant sélectionné pour la plage de températures concernée.

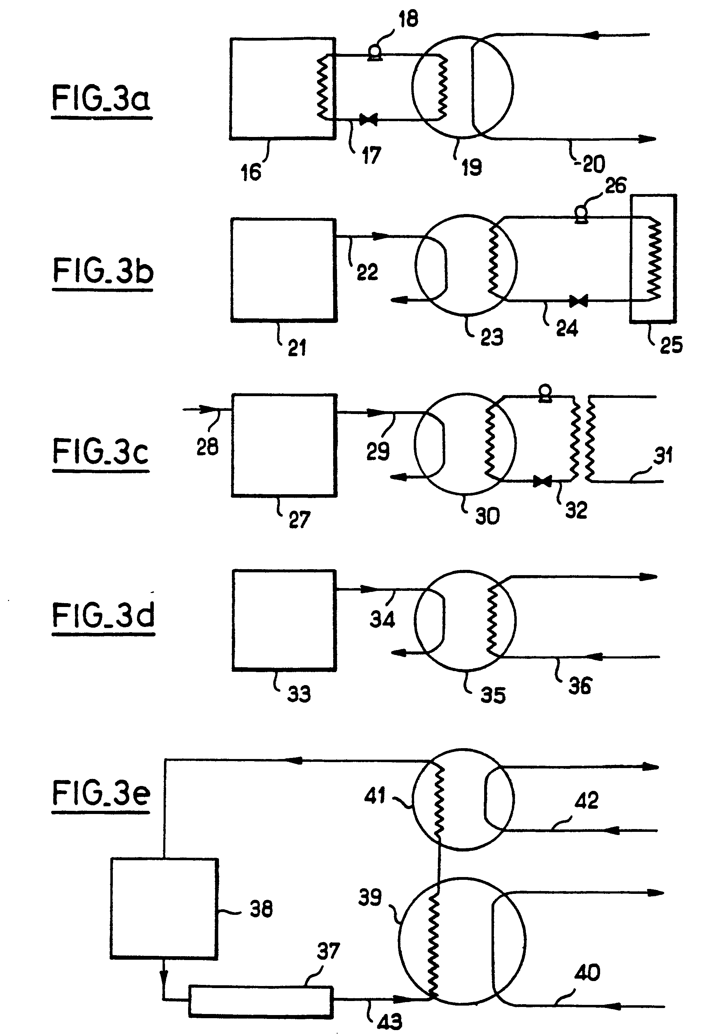

Les figures 3a à 3e illustrent quelques exemples d'application de ce système thermo-redresseur à déstockage permanent (le stockage n'étant quant à lui qu'intermittent).

- Figure 3a la source intermittente est une pièce 16, thermostatée à - 25°C (chambre froide par exemple), et le circuit primaire 17, avec compresseur 18, est parcouru par un fréon. Le dispositif évaporateur-stockeur 19 de l'invention utilise une paraffine comme matériau à changement de phase, et permet d'obtenir une source continue d'air chaud à la sortie du circuit secondaire 20 à l'entrée duquel l'air froid est admis, ce qui permet une application au chauffage usine en utilisant les pertes calorifiques de la pièce thermostatée.

- Figure 3b: la source intermittente est un local ou une pièce habitée 21 dont on utilise l'air de surchauffe qui peut être évacué par ventilation à la sortie du circuit primaire 22. Le dispositif évaporateur-stockeur 23 de l'invention utilise un sel hydraté comme matériau à changement de phase, et permet par un circuit 24 de pompe à chaleur (avec compresseur 26, ou sans pour une utilisation directe) une production continue d'eau chaude à partir d'un ballon d'eau chaude 25: c'est une application intéressante pour le chauffage domestique à partir des surchauffes occasionnelles.

- Figure 3c: la source intermittente est un four de séchage 27, recevant à son entrée 28 un air très chaud, et dont le circuit de sortie 29, délivrant un air chaud très humide qui est évacué, constitue le circuit primaire d'un dispositif évaporateur-stockeur 30 conforme à l'invention; une paraffine peut être utilisée comme matériau à changement de phase dans le dispositif. Ce dispositif permet de réchauffer en continu de l'air ou de l'eau passant dans un circuit 31, éventuellement par l'intermédiaire d'un circuit fermé 32 de pompe à chaleur.

- Figure 3d: la source intermittente est un four de cuisson 33, duquel sort de l'air très chaud par un circuit 34. Le dispositif évaporateur/stockeur 35 de l'invention, utilisant un mélange eutectique de sels (nitrates de sodium et de potassium par exemple) comme matériau à changement de phase, permet d'obtenir en continu une production de vapeur basse ou haute pression, alimentant un réseau associé relié au circuit secondaire 36 qui reçoit de l'eau à l'entrée.

- Figure 3e: la source intermittente est un dispositif 37 servant au refroidissement de moules, au moyen d'eau provenant d'un réservoir d'eau froide 38. L'eau sort du dispositif 37 à une température qui est de l'ordre de 60 à 70°C, de sorte que l'on utilisera plutôt une paraffine comme matériau à changement de phase dans le dispositif de l'invention. Le circuit primaire 43 est ici commun à deux dispositifs 39, 41 du type évaporateur-stockeur, chacun étant associé à un circuit secondaire 40, 42 respectivement, permettant un chauffage d'eau ou d'air à deux niveaux différents. Une telle utilisation étagée du dispositif de l'invention, pouvant naturellement comporter plus de deux étages avec un matériau à changement de phase correspondant à la gamme de températures concernée (par exemple niveau haut, niveau moyen, niveau bas) ouvre le champ à de nombreuses applications intéressantes.

Il va de soi que le dispositif d'échange avec stockage intégré qui vient d'être décrit peut présenter des structures et des modes de mise en oeuvre très variables. En particulier, avec une conception modulaire utilisant un empilement de plaques échangeuses, il est possible de reprendre les principes classiques de circulation, notamment pour une adaptation directe sur des systèmes existants:

- circuits alternés à simple passage pour chaque fluide, les quatre raccordements se faisant sur une tête fixe;

- circuits alternés à simple passage pour un fluide et à passages multiples pour l'autre fluide, trois raccordements se faisant sur la tête fixe tandis que le dernier se fait sur une tête mobile;

- circuits alternés à passages multiples pour les deux fluides, deux raccordements se faisant sur chacune des deux têtes;

- circuits alternés à simple passage pour chacun des fluides, mais lesdits circuits sont organisés en deux sous-ensembles se raccordant sur une tête intermédiaire de connexion.

## Revendications

1. Dispositif d'échange de chaleur parcouru par deux fluides à circuits indépendants, un fluide primaire ($F_1$) échangeant avec une source thermique intermittente à l'entrée du dispositif, et un fluide secondaire ($F_2$) permettant la récupération d'énergie thermique à la sortie, ledit fluide primaire échangeant en permanence avec un milieu de stockage de chaleur utilisant un matériau à changement de phase, ledit milieu remplissant une fonction de tampon thermique à température constante lors du changement de phase dudit matériau, caractérisé par le fait qu'il comporte un empilement d'au moins deux plaques échangeuses (8), dont chacune présente un gaufrage définissant au moins un serpentin continu (9) de telle façon que lesdites plaques échangeuses soient parcourues en série ou en parallèle par le fluide secondaire ($F_2$), lesdites plaques échangeuses (8) étant par ailleurs séparées par au moins une entretoise perforée (6, 10) autorisant l'écoulement du fluide primaire ($F_1$) dans l'espace inter-plaques laissé libre par le milieu de stockage utilisant un matériau à changement de phase (1, 13), l'échange de fluide secondaire ($F_2$) se faisant ainsi simultanément avec le fluide primaire ($F_1$) et avec ledit milieu de stockage, de façon que ledit fluide secondaire ($F_2$) permette d'obtenir à la sortie une puissance thermique essentiellement constante, indépendamment des fluctuations thermiques du fluide primaire ($F_1$).

2. Dispositif d'échange de chaleur selon la revendication 1, caractérisé par le fait que la ou les entretoises (10) permettent une conteneurisation alvéolaire du matériau à changement de phase disposé directement contre une face de la plaque échangeuse associée.

3. Dispositif d'échange de chaleur selon l'une des revendications 1 et 2, caractérisé par le fait que la ou les entretoises (10) sont orientées essentiellement perpendiculairement à l'écoulement du fluide primaire ($F_1$).

4. Dispositif d'échange de chaleur selon l'une des revendications 1 à 3, caractérisé par le fait que le fluide primaire ($F_1$) est en contact direct avec le milieu de stockage.

5. Dispositif d'échange de chaleur selon l'une des revendications 1 à 3, caractérisé par le fait que le fluide primaire ($F_1$) est en contact indirect avec le milieu de stockage, par l'intermédiaire d'une interface matérialisée par une paroi ou un film.

6. Dispositif d'échange de chaleur selon l'une des revendications 1 à 5, caractérisé par le fait que le fluide primaire ($F_1$) échange successivement avec différents milieux de stockage utilisant chacun un matériau à changement de phase correspondant à un niveau thermique prédéterminé, un fluide secondaire (40, 42) étant associé à chacun desdits milieux de stockage pour l'obtention d'une puissance thermique correspondante essentiellement constante.

7. Dispositif d'échange de chaleur selon l'une des revendications 1 à 6, caractérisé par le fait que les écoulements de fluide primaire ($F_1$) et de fluide secondaire ($F_2$) sont à contre-courants.

8. Dispositif d'échange de chaleur selon l'une des revendications 1 à 7, caractérisé par le fait que le fluide secondaire ($F_2$) est choisi de façon à pouvoir subir des changements de phase durant le fonctionnement, pour permettre un relèvement du niveau de l'énergie thermique récupérée.

## Patentansprüche

1. Wärmetauscher, der von zwei Fluiden in getrennten Kreisen durchströmt wird, wobei ein Primärfluid ($F_1$) mit einer intermittierenden Wärmequelle am Einlaß des Austauschers austauscht und ein Sekundärfluid ($F_2$) die Rückgewinnung von Wärmeenergie am Auslaß ermöglicht, dabei das genannte Primärfluid ständig mit einem eine phasenzustandsveränderliche Masse benutzenden Wärmespeichermilieu austauscht, das bei Phasenzustandsänderung der genannten Masse die Funktion eines Wärmepuffers mit konstanter Temperatur erfüllt, dadurch gekennzeichnet, daß er einen Stapel von wenigstens zwei Austauscherplatten (8) umfaßt, von denen jede eine wenigstens eine endlose Schlange (9) begrenzende Sickenanordnung aufweist, derart, daß die genannten Austauscherplatten in Serie oder parallel vom Sekundärfluid ($F_2$) durchströmt werden, wobei die genannten Austauscherplatten (8) im übrigen durch wenigstens eine perforierte Zwischenplatte (6, 10) getrennt sind, welche das Abströmen des Primärfluides ($F_1$) in den vom eine phasenzustandsveränderliche Masse (1, 13) benutzenden Speichermilieu frei gelassenen Plattenzwischenraum zuläßt, dabei der Austausch von Sekundärfluid ($F_2$) somit gleichzeitig mit dem Primärfluid ($F_1$) und dem genannten Speichermilieu erfolgt, derart, daß das Sekundärfluid ($F_2$) es ermöglicht, am Auslaß eine im wesentlichen konstante Wärmeleistung unabhängig von Wärmeschwankungen des Primärfluides ($F_1$) zu erhalten.

2. Wärmetauscher nach Anspruch 1, dadurch gekennzeichnet, daß die Zwischenwand oder die Zwischenwände (10) eine bienenwabenförmige Containerisierung der direkt an einer Fläche der zugehörigen Austauscherplatte angeordneten phasenzustandsveränderlichen Masse ermöglicht bzw. ermöglichen.

3. Wärmetauscher nach einem der Ansprüche 1 und 2, dadurch gekennzeichnet, daß die Zwischenwand oder die Zwischenwände (10) im wesentlichen rechtwinklig zur Strömung des

Primärfluides ($F_1$) angeordnet ist bzw. sind.

4. Wärmetauscher nach einem der Ansprüche 1 bis 3, dadurch gekennzeichnet, daß das Primärfluid ($F_1$) in direkter Berührung mit dem Speichermilieu ist.

5. Wärmetauscher nach einem der Ansprüche 1 bis 3, dadurch gekennzeichnet, daß das Primärfluid ($F_1$) über eine Grenzfläche in Form einer Wand oder eines Films in indirekter Berührung mit dem Speichermilieu ist.

6. Wärmetauscher nach einem der Ansprüche 1 bis 5, dadurch gekennzeichnet, daß das Primärfluid ($F_1$) nacheinander mit verschiedenen Speichermilieus austauscht, die je eine einem vorbestimmten Wärmeniveau entsprechende phasenzustandsveränderliche Masse benutzen, wobei jedem der genannten Speichermilieus zur Erzielung einer im wesentlichen konstanten entsprechenden Wärmeleistung ein Sekundärfluid (40, 42) zugeordnet ist.

7. Wärmetauscher nach einem der Ansprüche 1 bis 6, dadurch gekennzeichnet, daß das Primärfluid ($F_1$) und das Sekundärfluid ($F_2$) gegensinnig strömen.

8. Wärmetauscher nach einem der Ansprüche 1 bis 7, dadurch gekennzeichnet, daß das Sekundärfluid ($F_2$) so gewählt ist, daß es im Betrieb Phasenzustandsänderungen erfahren kann, um eine Anhebung des Niveaus der rückgewonnenen Wärmeenergie zu ermöglichen.

**Claims**

1. Heat exchange device through which there flow two fluids with independent circuits, a primary fluid ($F_1$) exchanging with an intermittent heat source at the entry of the device, and a secondary fluid ($F_2$) permitting the recovery of heat energy at the exit, the said primary fluid exchanging continuously with a heat-storage medium employing a phase-change material, the said medium acting as a constant temperature heat buffer during the phase change of the said material, characterized in that it comprises a stack of at least two exchange plates (8), each of which has a corrugation defining at least one continuous coil (9) so that the secondary fluid ($F_2$) flows through the said exchange plates in series or in parallel, the said exchange plates (8) being furthermore separated by at least one perforated baffle (6, 10) allowing the primary fluid ($F_1$) to flow in the interplate space left free by the storage medium employing a phase-change material (1, 13), the exchange of secondary fluid ($F_2$) thus taking place simultaneously with the primary fluid ($F_1$) and with the said storage medium, so that the said secondary fluid ($F_2$) enables an essentially constant heat power to be obtained at the exit independently of the heat fluctuations of the primary fluid ($F_1$).

2. Heat exchange device according to claim 1, characterized in that the baffle(s) (10) permits (permit) a cellular containerization of the phase-change material placed directly against a face of the associated exchange plate.

3. Heat exchange device according to either of claims 1 and 2, characterized in that the baffle(s) (10) is (are) directed essentially perpendicularly to the flow of the primary fluid ($F_1$).

4. Heat exchange device according to one of Claims 1 to 3, characterized in that the primary fluid ($F_1$) is in direct contact with the storage medium.

5. Heat exchange device according to one of claims 1 to 3, characterized in that the primary fluid ($F_1$) is in indirect contact with the storage medium, through the intermediacy of an interface taking the form of a wall or a film.

6. Heat exchange device according to one of claims 1 to 5, characterized in that the primary fluid ($F_1$) exchanges successively with various storage media, each employing a phase-change material corresponding to a predetermined temperature level, a secondary fluid (40, 42) being associated with each of the said storage media in order to obtain an essentially constant corressponding heat power.

7. Heat exchange device according to one of claims 1 to 6, characterized in that the primary fluid ($F_1$) and secondary fluid ($F_2$) flows are countercurrent.

8. Heat exchange device according to one of Claims 1 to 7, characterized in that the secondary fluid ($F_2$) is chosen so as to be capable of undergoing phase changes during the operation, to permit an increase in the level of heat energy recovered.

# FIG_1

0 213 038

## FIG_2

0 213 038

FIG.3a

FIG.3b

FIG.3c

FIG.3d

FIG.3e